# EUROPÄISCHE PATENTSCHRIFT

(11) **EP 1 270 286 B1**
(45) Veröffentlichungstag und Bekanntmachung des Hinweises auf die Patenterteilung: **17.05.2006**
(21) Anmeldenummer: 02006728.6
(22) Anmeldetag: 23.03.2002
(51) Int. Cl.: B60H 1/00, B60H 1/34

(54) **Luftleitvorrichtung, insbesondere eines Fahrzeugs**
Air directing device especially for a vehicle
Dispositif pour diriger l'air, notamment pour un véhicule

(30) Priorität: 27.06.2001 DE 10130951
(43) Veröffentlichungstag der Anmeldung: 02.01.2003
(73) Patentinhaber: Behr GmbH & Co. KG, 70469 Stuttgart (DE)
(72) Erfinder: Geskes, Peter, Dr., 70469 Stuttgart (DE)
(74) Vertreter: Grauel, Andreas

(56) Entgegenhaltungen:
- EP-A- 0 257 500
- US-A- 3 017 899
- US-A- 3 084 715
- US-A- 3 267 962
- US-A- 4 970 947
- US-A- 5 591 079

## Beschreibung

Die Erfindung betrifft eine Luftleitvorrichtung, insbesondere eines Fahrzeugs, mit mindestens zwei in unterschiedliche Öffnungsstellungen verschwenkbaren, miteinander mittels einer Mitnahmeeinrichtung gekoppelten Lamellen, wobei mindestens zwei Lamellen an zueinander in Bezug auf einen jeweiligen Lamellendrehpunkt entgegengesetzten Lamellenbereichen mit der Mitnahmeeinrichtung wirkverbunden sind, gemäß Oberbegriff des Anspruchs 1.

Luftleitvorrichtungen der eingangs genannten Art sind bereits bekannt. Beispielsweise offenbart die US-A-5,591,079 eine gattungsgemäße Luftleitvorrichtung, welche eine Verschwenkung von Lamellen in verschiedene Öffnungsstellungen erlaubt. Nachteilhafterweise sind derartige bekannte Luftleitvorrichtungen hinsichtlich der möglichen Lamellenverstellung beziehungsweise -verschwenkung nicht zufriedenstellend eingeschränkt.

Die US 3017899 offenbart eine Anordnung von verschwenkbaren Klappen, bei welchen zwei Klappen gleichsinnig und eine Klappe gegensinnig verschwenkbar ist.

Die US 3084715 offenbart eine Klappenanordnung, bei welchen alle Klappen über eine Hebel- oder Zahnradmechanismus miteinander verdrehbar sind.

Es ist Aufgabe der Erfindung, eine Luftleitvorrichtung der eingangs genannten Art zu schaffen, mittels welcher eine flexiblere Lamelleneinstellbarkeit ermöglicht wird.

Zur Lösung der Aufgabe wird eine Luftleiteinrichtung mit den Merkmalen des Anspruchs 1 vorgeschlagen.

Vorteilhaft dabei ist, wenn die Lamellen mittels der Mitnahmeeinrichtung in eine jeweilige Schließstellung schwenkbar sind. Hierdurch ist es möglich, die Lamellen zwischen einer maximalen Öffnungsstellung und einer den Luftdurchsatz minimierenden Schließstellung zu verschwenken, so dass eine maximale Flexibilität hinsichtlich der Einstellbarkeit von möglichen Luftstrom-Austrittsrichtungen und Luftteilstrom-Intensitäten geschaffen werden. Es lassen sich somit unterschiedlichste Strömungsprofile an der Austrittsseite der Luftleitvorrichtung mittels einer geeigneten Bewegung der Mitnahmeeinrichtung erzielen.

Mit Vorteil verschließen die sich in Schließstellung befindenden Lamellen luftstromaustrittsseitig vollständig die Luftleitvorrichtung. Somit wird bei sich in Schließstellung befindenden Lamellen ein -auch minimaler- unerwünschter Luftdurchsatz durch die Luftleitvorrichtung vermieden. Ferner ist in einer derartigen Betriebsstellung der Lamellen die Luftleitvorrichtung nach außen (luftaustrittsseitig) beispielsweise vor einer grundsätzlich zu vermeidenden Verschmutzung geschützt.

Die Lamellen sind an der Mitnahmeeinrichtung vorzugsweise frei drehbar angelenkt. Hierdurch wird eine störungsfreie und flexible Lamellenverschwenkung um den jeweiligen Lamellendrehpunkt ermöglicht.

Vorteilhafterweise ist mindestens eine Lamelle gesondert mittels der Mitnahmeeinrichtung in ihre Schließstellung schwenkbar. Mittels einer derartigen lamellenindividuellen Einstellbarkeit der Luft leitvorrichtung ist es möglich, beispielsweise in einem Fahrzeug eine besonders flexibel einstellbare Belüftung zu erzielen. Insbesondere lassen sich hierdurch nicht nur konvergierende oder divergierende Luftströmungsprofile an der Austrittsseite der Gleitvorrichtung einstellen, sondern auch unsymmetrische (diffuse) Luftströmungsverläufe realisieren.

Entsprechend einer bevorzugten Ausführungsform ist mindestens eine Lamelle mittels der Mitnahmeeinrichtung aus der Schließstellung in eine in Bezug auf eine weitere Bewegungsfolge der Mitnahmeeinrichtung unabhängige Öffnungsstellung und mittels selbiger wieder zurück in die Schließstellung schwenkbar. Hierdurch ergibt sich ein Luftströmungsprofil an der Austrittsseite der Luftleitvorrichtung, das sich während einer bestimmten Bewegungsfolge der Mitnahmeeinrichtung aus mindestens einem konstanten Luftteilstrom und aus mindestens einem, richtungs- und geschwindigkeitsveränderbaren, weiteren Luftteilstrom zusammensetzt.

Die Lamelle kann mittels eines zeitweise mit selbiger in Anlagekontakt tretenden Mitnehmerelements der bewegbaren Mitnahmeeinrichtung in die unabhängige Öffnungsstellung und in die Schließstellung schwenkbar sein. Ein derartiges Mitnehmerelement ist verhältnismäßig einfach realisierbar und ermöglicht mittels Herstellung eines Anlagekontakts mit der entsprechenden Lamelle in definierten Betriebspositionen der Mitnahmeeinrichtung eine zuverlässige Verschwenkung derselben Lamelle in die unabhängige Öffnungsstellung beziehungsweise in die Schließstellung.

Die sich in unabhängiger Öffnungsstellung befindende Lamelle ist vorzugsweise parallel zu einer Hauptdurchsetzungsrichtung der Luftleitvorrichtung ausgerichtet. Somit erfolgt durch diese Lamelle in der unabhängigen Öffnungsstellung praktisch keine Umlenkung der die Luftleitvorrichtung durchsetzenden Luft.

Mit Vorteil ist die sich in unabhängiger Öffnungsstellung befindende Lamelle in Bezug auf den Durchsetzungsquerschnitt der Luftleitvorrichtung mittig angeordnet. Dies ermöglicht die Einstellung eines symmetrischen Luftstromprofils an der Austrittsseite der Luftleitvorrichtung, wie zum Beispiel die Ausbildung einer konvergierenden oder divergierenden Luftströmung.

Gemäß einer bevorzugten Ausführungsform sind mittels der Mitnahmeeinrichtung mindestens zwei Lamellen mit ihren an der Luftaustrittsseite liegenden Enden aufeinander zuschwenkbar zur Erzielung einer konvergierenden Luftaustrittsströmung und/oder voneinander wegschwenkbar zur Erzeugung einer divergierenden Luftaustrittsströmung. Hierbei lassen sich sowohl symmetrische als auch nicht symmetrische Luftaustrittsprofile erzeugen.

Die Lamellen sind vorzugsweise um ihren Mittelpunkt drehbar an einer Halterung gelagert und in geeigneten Lamellenendbereichen an der Mitnahmeeinrichtung angelenkt. Durch die Lagerung der Lamellen in ihrem Mittelpunkt ist es möglich, bereits bei einer Lamellendrehung um 180° eine entsprechende Schließstellung einzustellen.

Entsprechend einer möglichen Ausführungsform ist mittels der Mitnahmeeinrichtung mindestens eine erste Lamelle in einer ersten Drehrichtung vollständig um den zugehörigen Drehpunkt und mindestens eine zweite Lamelle in einer zweiten Drehrichtung, entgegengesetzt zur ersten Drehrichtung, bis einem definierten Drehumkehrpunkt und anschließend in der ersten Drehrichtung drehbar. Dadurch, dass bei einer Bewegungsfolge der Mitnahmeeinrichtung mindestens eine zweite Lamelle in zwei zueinander entgegengesetzten Drehrichtungen geschwenkt wird, lassen sich unterschiedlichste, auch unsymmetrische Strömungsprofile an der Austrittsseite der Luftleitvorrichtung einstellen.

Mit Vorteil ist im Drehumkehrpunkt die zweite Lamelle in einer Öffnungsstellung und die erste Lamelle in eine Schließstellung positioniert, wobei sich der Lamellenanlenkungspunkt der ersten Lamelle in einem Totpunkt befindet. In dieser Weise lässt sich die Luftleitvorrichtung auch lediglich teilweise verschließen.

Vorteilhafterweise ist die Lamellenanlenkung an einem jeweiligen, in oder entgegen der Lamellendrehrichtung vorstehenden Lamellenvorsprung realisiert. Mittels geeigneter Anordnung der Lamellenvorsprünge ist es möglich, mindestens eine Lamelle in ihre Schließstellung zu positionieren, während die restlichen Lamellen gleichzeitig unterschiedliche Öffnungsstellungen einnehmen können.

Entsprechend einer weiteren Ausführungsform weist die Mitnahmeeinrichtung ein entsprechendes Kopplungselement auf zur jeweiligen Bewegungskopplung einer Mehrzahl an ersten Lamellen und an zweiten Lamellen. Dabei sind die Kopplungselemente an ihren Lamellenanlenkungspunkten jeweils mindestens entlang eines Sektors einer geschlossenen Kreisbahn geführt. Zur Bewegung der Kopplungselemente weist die Mitnahmeeinrichtung ein Schubelement auf, das in einem jeweiligen Anlenkungspunkt mit dem entsprechenden Kopplungselement wirkverbunden ist. Das Schubelement kann als geradlinige, taumelbewegbare Stange ausgebildet sein. Mittels einer derartigen Luftleitvorrichtung lassen sich vorteilhafterweise unterschiedlichste Luftströmungsprofile mit unterschiedlichen Strömungsrichtungen und -intensitäten in handhabungsfreundlicher Weise einstellen.

Alternativ kann das Schubelement als stufenförmige, längsbewegbare Stange ausgebildet sein. Dabei kann die längsbewegbare Stange mindestens eine Führungslängsnut zur Stangenbewegungsführung und für einen jeweiligen Lamellenanlenkungspunkt eine entsprechende Führungsquernut zur Führung einer Relativbewegung eines Lamellenverbindungselements in Bezug auf die Stange aufweisen. Eine derartige Luftleitvorrichtung erlaubt in verhältnismäßig einfacher Weise eine flexible Einstellung der Lamellen in konvergierende oder divergierende oder parallele Luftdurchsetzungen erzeugende Öffnungsstellungen sowie in eine entsprechende Schließstellung.

Gemäß einer weiteren, alternativen Ausführungsform weist die Mitnahmeeinrichtung eine Mehrzahl an zueinander angelenkte Schubelemente auf, an denen jeweils mindestens eine Lamelle angelenkt ist. Dabei sind die Schubelemente mittels eines betätigbaren Antriebselements zur Lamellenverschwenkung lagebewegbar. Da die Lamellenanlenkungspunkte jeweils mindestens entlang eines Sektors einer geschlossenen Kreisbahn geführt sind, ist auch mittels einer derartigen Mitnahmeeinrichtung eine zuverlässige und korrekte sowie flexible Lamellenverschwenkung möglich.

Die Lamellenanlenkungspunkte können in unterschiedlichen Abständen zu den zugehörigen Lamellendrehpunkten liegen. Alternativ ist es auch denkbar, unterschiedliche Lamellenformen beziehungsweise -größen vorzusehen.

Entsprechend einer weiteren, alternativen Ausführungsform weist die Mitnahmeeinrichtung zwei voneinander beabstandete Lamellenanlenkungselemente auf, die jeweils mit einem zugehörigen Bewegungsübertragungselement gelenkartig verbunden sind, welche mittels eines Antriebssystems zur Lamellenverschwenkung bewegbar sind. Dabei können die Bewegungsübertragungselemente mittels eines gemeinsamen Schubelements in Form einer Stange in Bewegung versetzt werden. Die Lamellenanlenkungselemente sind in ihren Lamellenanlenkungspunkten und in ihren Anlenkungspunkten für die Bewegungsübertragungselemente jeweils mindestens entlang eines Sektors einer geschlossenen Kreisbahn geführt. Eine derartig ausgebildete Luftleitvorrichtung erlaubt ebenfalls eine flexible Lamellenverstellung.

Entsprechend einer weiteren, alternativen Ausführungsform sind die Bewegungsübertragungselemente zur Lamellenverschwenkung jeweils drehfest mit einem zugehörigen Zahnrad eines Zahnradtriebs verbunden, wobei die Zahnräder miteinander gekoppelt sind. Ferner ist es möglich, dass die Lamellenanlenkungselemente jeweils einen Zahnstangensektor aufweisen, welche mit einem zugehörigen Zahnrad in Eingriff stehen, wobei die Zahnräder miteinander gekoppelt sind. Aufgrund der Kopplung der Zahnräder reicht es aus, lediglich ein Zahnrad beispielsweise mittels eines Stellmotors anzutreiben, um eine flexible Lamellenverstellung zu gewährleisten.

Weitere vorteilhafte Ausgestaltungen der Erfindung ergeben sich aus der Beschreibung.

Die Erfindung wird nachfolgend in mehreren Ausführungsbeispielen anhand einer zugehörigen Zeichnung näher erläutert. Es zeigen:
- Figuren 1 bis 7: schematische Seitenansichten einer ersten Ausführungsform einer Luftleitvorrichtung in verschiedenen Betriebsstellungen;
- Figuren 8 und 9: schematische Seitenansichten eines zweiten Ausführungsbeispiels einer Luftleitvorrichtung in unterschiedlichen Betriebsstellungen;
- Figur 10: eine schematische Seitenansicht eines dritten Ausführungsbeispiels einer Luft- leitvorrichtung in einer möglichen Öffnungsstellung;
- Figur 11: eine schematische Seitenansicht eines vierten Ausführungsbeispiels einer Luftleitvorrichtung in einer möglichen Öffnungsstellung;
- Figuren 12 bis 14: schematische Seitenansichten einer fünften Ausführungsform einer Luftleitvor richtung in unterschiedlichen Betriebs stellungen, und
- Figur 15: eine schematische Perspektivdarstellung der Luftleitvorrichtung entsprechend der ersten Ausführungsform.

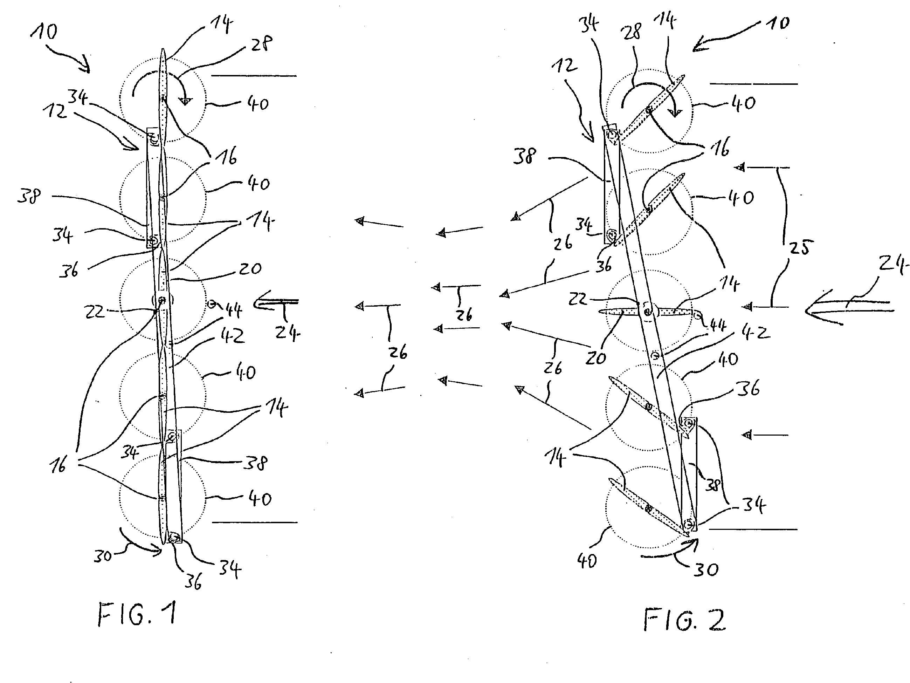

Die Figuren 1 bis 7 zeigen schematische Seitenansichten eines ersten Ausführungsbeispiels einer allgemein mit 10 bezeichneten Luftleitvorrichtung in unterschiedlichen Betriebsstellungen. Dabei ist in Figur 1 die Luftleitvorrichtung 10 in Schließstellung dargestellt, während die Figuren 2 bis 7 mehrere, kontinuierlich einstellbare Öffnungsstellungen der Luftleitvorrichtung 10 darstellen. Die Luftleitvorrichtung 10 kann insbesondere in einem Fahrzeug zum Einsatz kommen.

Sie enthält gemäß dem vorliegenden Ausführungsbeispiel fünf Lamellen 14, welche entsprechend Figur 1 geeignet sind, die Luftleitvorrichtung 10 nach außen vollständig und glatt zu verschließen. Zur jeweiligen Verschwenkung der Lamellen 14 um ihren Drehpunkt 16 ist eine Mitnahmeeinrichtung 12 vorgesehen, welche ein Schubelement 42 in Form einer geradlinigen, taumelbewegbaren Stange und zwei mit selbiger gelenkartig verbundene Kopplungselemente 38 aufweist. An den Kopplungselementen 38 sind jeweils zwei Lamellen 14 in entsprechenden Lamellenanlenkungspunkten 34 angelenkt. Dabei ist die Lamellenanlenkung an einem jeweiligen, in oder entgegen der Lamellendrehrichtung (Drehrichtung 28 der zwei oberen miteinander gekoppelten Lamellen 14 und Drehrichtung 30 der zwei unteren miteinander gekoppelten Lamellen 14) vorstehenden Lamellenvorsprung 36 realisiert. Die Lamellenanlenkungspunkte 34 sind in diesem Ausführungsbeispiel in Lamellenendbereichen vorgesehen, wobei in Öffnungsstellung (Figuren 2 bis 7) die Lamellenanlenkungspunkte 34 der zwei oberen, miteinander gekoppelten Lamellen 14 in Bezug auf den entsprechenden Lamellendrehpunkt 16 in einem jeweils entgegengesetzten Lamellenbereich liegt als die Lamellenanlenkungspunkte 34 der zwei unteren, miteinander gekoppelten Lamellen 14.

Die in den Figuren 1 bis 7 dargestellte mittlere Lamelle 14 (Lamelle 20) ist mittels der Mitnahmeeinrichtung 12 aus der Schließstellung (Figur 1) in eine in Bezug auf eine weitere Bewegungsfolge der Mitnahmeeinrichtung 12 unabhängige Öffnungsstellung (Figuren 2 bis 7) und mittels selbiger wieder zurück in die Schließstellung schwenkbar. Hierzu ist ein Mitnehmerelement 22 der bewegbaren Mitnahmeeinrichtung 12 vorgesehen, das zeitweise mit der Lamelle 20 in Anlagekontakt tritt, um selbige in die unabhängige Öffnungsstellung (Figuren 2 bis 7) beziehungsweise in die Schließstellung (Figur 1) zu schwenken. Gemäß den Figuren 2 bis 7 ist die sich in unabhängiger Öffnungsstellung befindende Lamelle 20 parallel zu einer Hauptdurchsetzungsrichtung 24 der Luftleitvorrichtung 10 ausgerichtet.

Die Kopplungselemente 38 sind an ihren Lamellenanlenkungspunkten 34 jeweils mindestens entlang eines Sektors einer geschlossenen Kreisbahn 40 geführt. Mittels der Mitnahmeeinrichtung 12 werden ausgehend von der Betriebsposition der Figur 1 die oberen zwei Lamellen 14 entsprechend der Drehrichtung 28 um ihren jeweiligen Drehpunkt 16 geschwenkt, während gleichzeitig die unteren zwei Lamellen 14 in entsprechender Weise in Drehrichtung 30, die zur Drehrichtung 28 entgegengesetzt ist, geschwenkt werden. Darüber hinaus erfolgt mittels des Mitnehmerelements 22 eine Drehung der Lamelle 20 (mittlere Lamelle 14) aus ihrer durch einen Anschlag 44 definierten Schließstellung (vertikale Stellung gemäß Figur 1) in Drehrichtung 28 in eine durch einen weiteren Anschlag 44 definierte Öffnungsstellung (Figuren 2 bis 7). Bei der in Figur 2 dargestellten Betriebsstellung der Lamellen 14 wird somit eine Lufteintrittsströmung (Pfeile 25) derart mittels der Luftleitvorrichtung 10 umgelenkt, dass eine im Wesentlichen konvergierende Luftaustrittsströmung (Pfeile 26) erhalten wird.

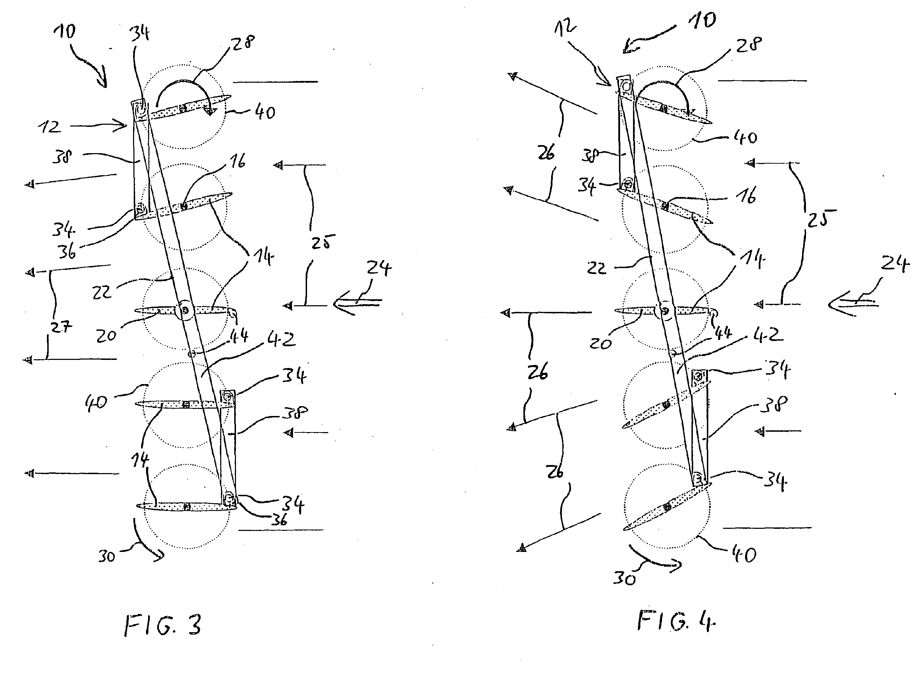

Erfolgt nun eine weitere Drehung des oberen Lamellenpaares gemäß Pfeil 28 und des unteren Lamellenpaares gemäß Pfeil 30, so ergibt sich eine geringfügig einseitig konvergierende, nicht symmetrische Luftaustrittsströmung (Pfeile 27). In dieser Betriebsstellung sind die unteren, miteinander gekoppelten Lamellen 14 parallel zur Lamelle 20 horizontal ausgerichtet, während das obere Lamellenpaar geringfügig schräg gestellt ist unter Ausbildung einer leicht konvergierenden Luftteilströmung. Bei einer weiteren Drehung der Lamellenpaare gemäß Pfeil 28 beziehungsweise Pfeil 30 wird entsprechend Figur 4 eine divergierende Luftaustrittsströmung 26 erzeugt.

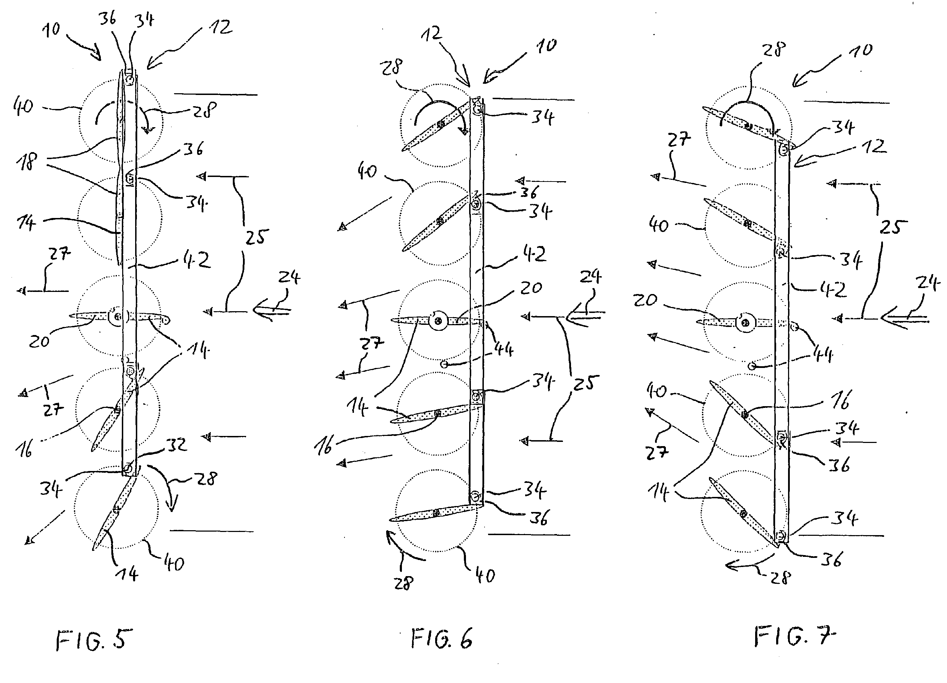

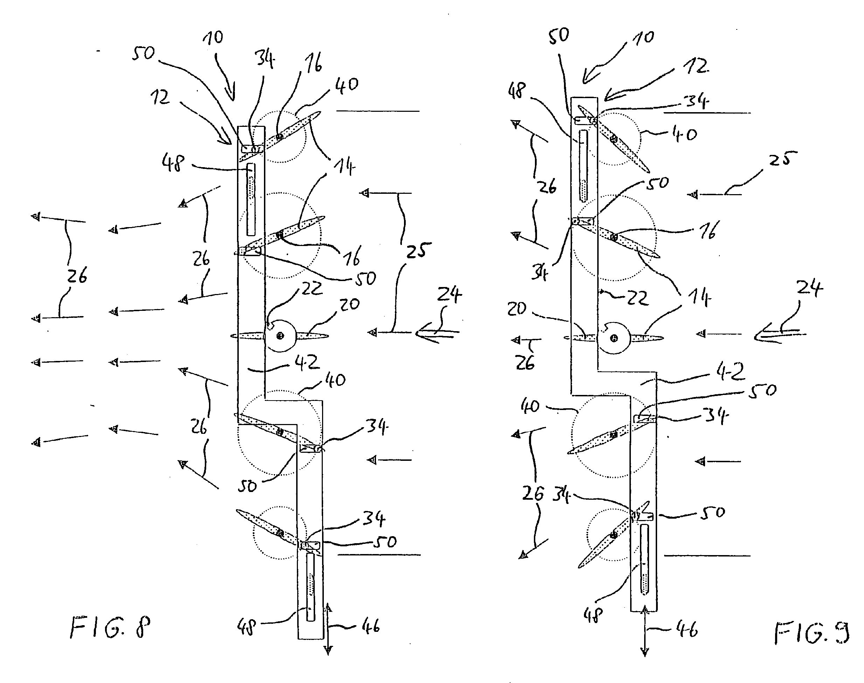

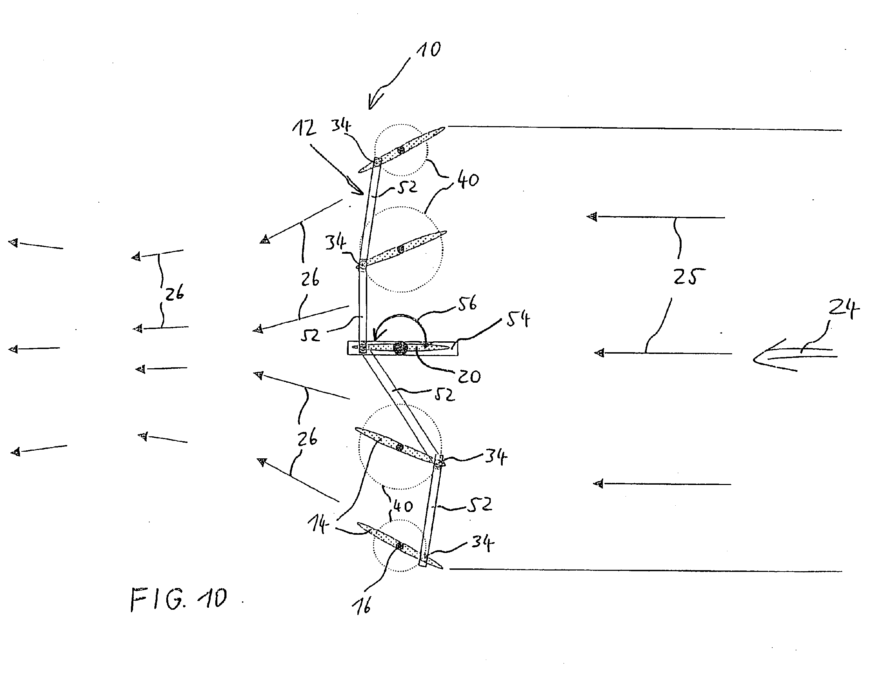

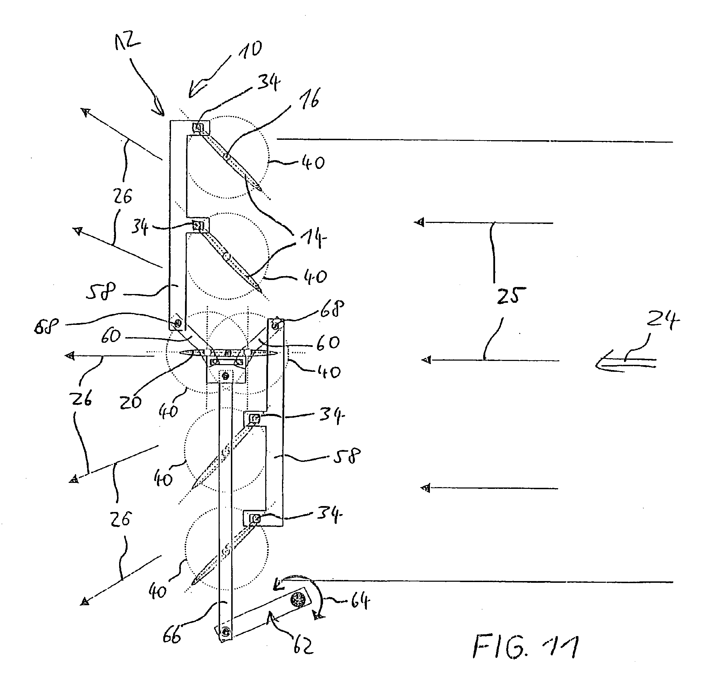

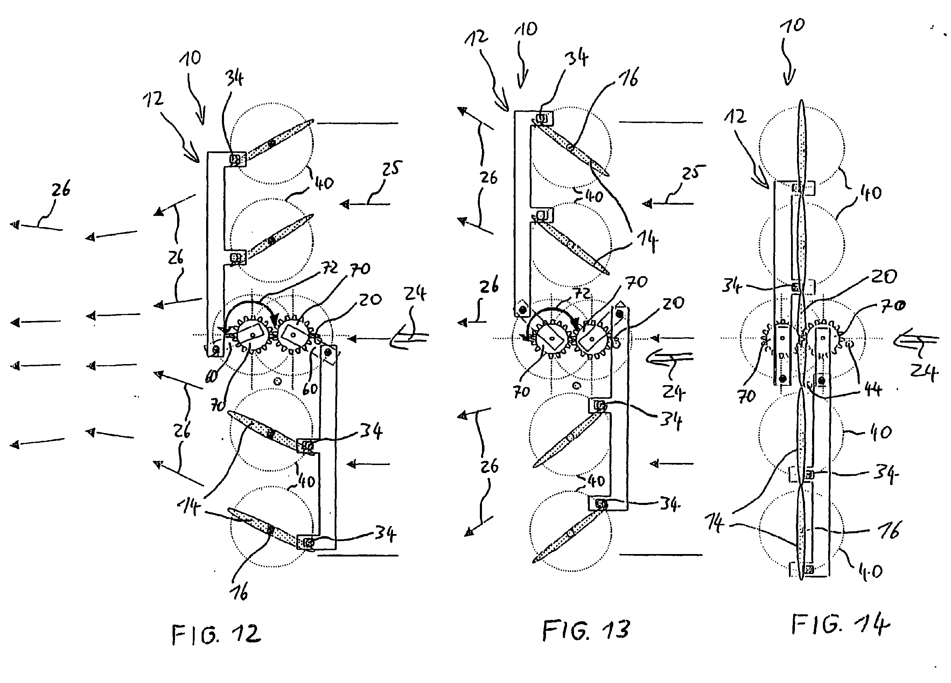

Figur 5 zeigt eine mittels einer weiteren Drehung der Lamellenpaare gemäß Pfeil 28 beziehungsweise Pfeil 30 einstellbaren Betriebsstellung der Lamellen 14, wobei in dieser Betriebsstellung die oberen, miteinander gekoppelten Lamellen in Schließstellung positioniert sind, während das untere Lamellenpaar in einer eine im Wesentlichen divergierende Luftaustrittströmung (Pfeile 27) erzeugende Betriebsstellung eingenommen hat. Bei der in Figur 5 dargestellten Betriebsstellung erfolgt eine Drehrichtungsumkehr des unteren Lamellenpaares, so dass nun beide Lamellenpaare gemäß den Pfeilen 28, das heißt im gleichen Drehsinn, gedreht werden. In dieser Betriebsposition befindet sich somit der jeweilige Lamellenanlenkungspunkt 34 der unteren, miteinander gekoppelten Lamellen 14 in einem definierten Drehumkehrpunkt 32. Bei einer sich anschließenden Drehung des oberen und unteren Lamellenpaares gemäß den Pfeilen 28 lassen sich Betriebsstellungen entsprechend den Figuren 6 und 7 sowie Luftaustrittsströmungen gemäß den Pfeilen 27 einstellen.

Bei einer von der Betriebsstellung gemäß Figur 7 ausgehenden weiteren Drehung der Lamellenpaare gemäß den Pfeilen 28 lässt sich erneut die in Figur 1 dargestellte Schließstellung realisieren. Bei einer derartigen Bewegungsfolge der Lamellen 14 werden die zwei oberen, miteinander gekoppelten Lamellen 14 gemäß Pfeil 28 um 360° gedreht, während die zwei unteren, ebenfalls miteinander gekoppelten Lamellen 14 zunächst um geringfügig weniger als 180° entsprechend Pfeil 30 gedreht und anschließend um den selben Winkel in entgegengesetzter Drehrichtung (Pfeil 28) zurückgedreht werden.

Die Figuren 8 und 9 zeigen ein zweites, alternatives Ausführungsbeispiel einer allgemein mit 10 bezeichneten Luftleitvorrichtung 10. Die Luftleitvorrichtung 10 weist eine Mitnahmeeinrichtung 12 in Form einer stufenförmigen, längsbewegbaren Stange auf. Die gemäß Doppelpfeil 46 längsbewegbare Stange 42 enthält zwei Führungslängsnuten 48, in welche zur Stangenbewegungsführung ein jeweiliges Führungselement einer nicht dargestellten Halterung der Luftleitvorrichtung 10 ragt und in selbiger längsverschiebbar aufgenommen ist. Ferner enthält die Stange 42 für einen jeweiligen Anlenkungspunkt 34 eine entsprechende Führungsquernut 50 zur Führung einer Relativbewegung eines Lamellenverbindungselements in Bezug auf die Stange 42. Die Lamellen 14 eines jeweiligen Lamellenpaares (oberes und unteres Lamellenpaar) sind an Lamellenanlenkungspunkten 34 mit der Stange 42 wirkverbunden, wobei die Lamellenanlenkungspunkte 34 in unterschiedlichen Abständen zu den zugehörigen Lamellendrehpunkten 16 liegen. Auch bei dieser Ausführungsform sind die Lamellenanlenkungspunkte 34 jeweils entlang eines Sektors einer geschlossenen Kreisbahn 40 geführt. Mittels einer Schwenkbewegung der Stange 42 gemäß Doppelpfeil 46 lassen sich sowohl im Wesentlichen konvergierende Luftaustrittsströmungen (Pfeile 26 gemäß Figur 8) als auch divergierende Luftaustrittsströmungen (Pfeile 28 entsprechend Figur 9) einstellen. Darüber hinaus entspricht die zweite Ausführungsform der Luftleitvorrichtung 10 gemäß den Figuren 8 und 9 hinsichtlich ihres konstruktiven Aufbaus und ihrer Funktionsweise im Wesentlichen der ersten Ausführungsform gemäß den Figuren 1 bis 7.

Figur 10 zeigt eine schematische Darstellung einer dritten Ausführungsform einer allgemein mit 10 bezeichneten Luftleitvorrichtung. Die Mitnahmeeinrichtung 12 dieser Ausführungsform enthält eine Mehrzahl an zueinander angelenkten Schubelementen 52, an denen jeweils mindestens eine Lamelle 14 angelenkt ist. Die Schubelemente 52 sind in Form von geradlinigen Stangen ausgebildet und mittels eines betätigbaren Antriebselements 54, das entsprechend Doppelpfeil 56 verschwenkbar ist, zur Lamellenverschwenkung lagebewegbar. Auch hier liegen die Lamellenanlenkungspunkte 34 in unterschiedlichen Abständen zu den zugehörigen Lamellendrehpunkten 16. Ansonsten entspricht die Funktionsweise der Luftleitvorrichtung 10 gemäß Figur 10 derjenigen der Luftleitvorrichtung entsprechend dem zweiten Ausführungsbeispiel (Figur 9).

Dabei ist es ferner möglich, statt einer im Wesentlichen geradlinigen Ausführung der Luftleitvorrichtung 10 gemäß der Figur 10 auch eine gekrümmte, insbesondere in Luftdurchsetzungsrichtung konkave und vorzugsweise im Wesentlichen halbrunde Luftleitvorrichtung 10 vorzusehen (nicht in den Figuren dargestellt). Bei einer derartigen möglichen Ausführungsform sind wenigstens ein Teil der Schubelemente 52 der Luftleitvorrichtung 10 in geeigneter Weise gekrümmt ausgebildet, während die Lamellen 14 entsprechend Figur 10 gestaltet sein können.

Figur 11 zeigt ein viertes Ausführungsbeispiel einer allgemein mit 10 bezeichneten Luftleitvorrichtung. Die Mitnahmeeinrichtung 12 weist zwei voneinander beabstandete Lamellenanlenkungselemente 58 auf, die jeweils mit einem zugehörigen Bewegungsübertragungselement 60 in Form eines Hebels gelenkartig verbunden sind. Die Bewegungsübertragungselemente 60 sind mittels einem gemäß Doppelpfeil 64 verschwenkbaren Antriebssystem 62 zur Lamellenverschwenkung bewegbar. Hierzu ist ein mit den Bewegungsübertragungselementen 60 wirkverbundenes gemeinsames Schubelement 66 in Form einer Stange vorgesehen. Die Lamellenanlenkungselemente 58 sind in ihren Lamellenanlenkungspunkten 34 und in ihren Anlenkungspunkten 68 für die Bewegungsübertragungselemente 60 jeweils mindestens entlang eines Sektors einer geschlossenen Kreisbahn 40 geführt. Auch diese Luftleitvorrichtung 10 erlaubt eine flexible Einstellung unterschiedlicher Luftaustrittsprofile, zum Beispiel eines divergierenden Luftaustrittsprofils gemäß Pfeilen 26. Die weitere Funktionsweise dieser Luftleitvorrichtung 10 entspricht im Wesentlichen derjenigen der oben beschriebenen Ausführungsbeispielen.

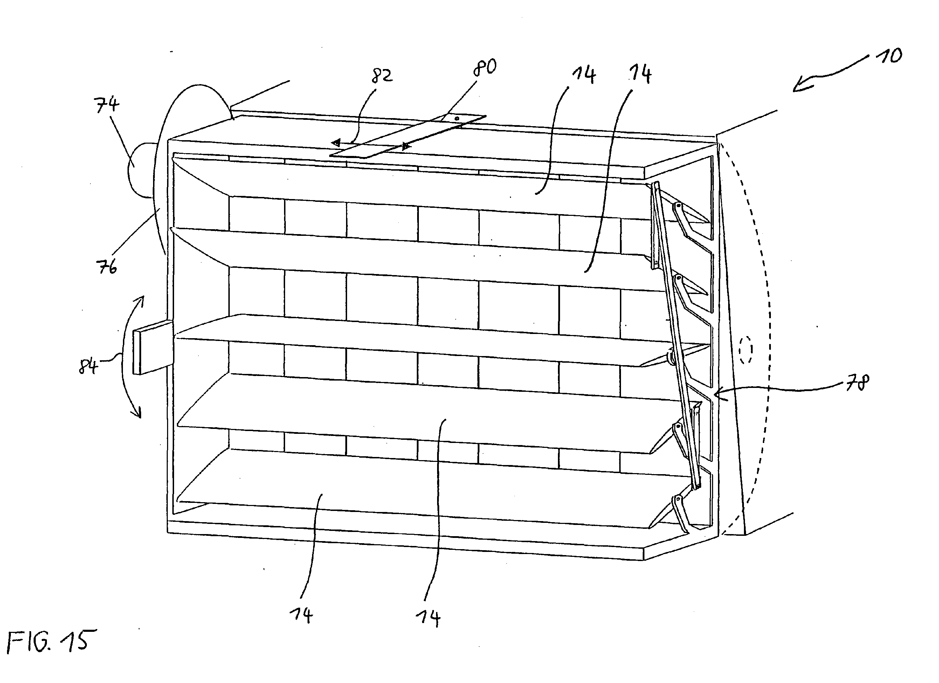

Die Figuren 12 bis 14 zeigen in schematischer Darstellung ein fünftes, alternatives Ausführungsbeispiel einer Luftleitvorrichtung 10, wobei im Gegensatz zum Ausführungsbeispiel gemäß Figur 11 nicht ein Schubelement (Stange 66), sondern ein Zahnradtrieb vorgesehen ist. Dabei sind die Bewegungsübertragungselemente 60 zur Lamellenverstellung jeweils drehfest mit einem zugehörigen Zahnrad 70 des Zahnradtriebs verbunden, wobei die Zahnräder 70 miteinander gekoppelt sind. Eines der Zahnräder 70 ist beispielsweise mit einem nicht dargestellten Stellmotor operativ verbunden zur Erzeugung einer Zahnraddrehung gemäß Doppelpfeil 72, mittels welcher eine Lamellenverstellung entsprechend den Figuren 12, 13, 14 erzielbar ist. Die Luftleitvorrichtung 10 gemäß den Figuren 12 bis 14 entspricht hinsichtlich ihres konstruktiven Aufbaus und ihrer Funktionsweise im Wesentlichen derjenigen der Luftleitvorrichtung 10 gemäß Figur 11.

Figur 15 zeigt eine schematische Perspektivdarstellung einer Luftleitvorrichtung 10 entsprechend dem Ausführungsbeispiel der Figuren 1 bis 7. Die Luftleitvorrichtung 10 weist zur Verstellung der Lamellen 14 sowohl einen Stellmotor 74 als auch eine manuelle Verstelleinrichtung 76 auf. Die Lamellen 14 sind hierzu an einer Halteeinrichtung 78 drehbar gelagert. Ferner enthält die Luftleitvorrichtung 10 eine Verstelleinrichtung 80, die entsprechend Doppelpfeil 82 verschiebbar ist und eine entsprechende Verdrehung hinterer, vertikal angeordneter Lamellen um eine entsprechende vertikale Achse bewirkt. Die Verstelleinrichtung 80 dient somit zur seitlichen Richtungsänderung des Luftdurchsatzes (in der Figur 15 eine Richtungsänderung nach links oder nach rechts). Schließlich ist eine Verdrehung der gesamten Luftleitvorrichtung 10 entsprechend Doppelpfeil 84 möglich. Die Luftleitvorrichtung 10 gemäß Figur 15 zeichnet sich somit durch eine besonders flexible Einstellbarkeit des Luftdurchsatzes und der Luftdurchsatzrichtungen sowie des Luftdurchlassprofils aus.

Gemäß einer nicht dargestellten, weiteren Ausführungsform können die Lamellenanlenkungselemente 58 jeweils einen Zahnstangensektor aufweisen, welche mit einem zugehörigen Zahnrad in Eingriff stehen, wobei die Zahnräder miteinander gekoppelt und mittels eines Stellmotors antreibbar sind. Auch ist es möglich, statt eines Zahnstangensektors beziehungsweise statt einer Zahnstange Zahnriemen vorzusehen, welche mit geeigneten Zahnrädern in Eingriff stehen. Die erfindungsgemäße Vorrichtung 10 erlaubt somit den Einsatz einer Vielzahl von unterschiedlichen Antriebssystemen zur Lamellenverstellung.

Vorteilhafterweise ist es mittels einer erfindungsgemäßen Luftleitvorrichtung möglich, nicht nur eine Richtungsänderung eines Luftstrahls beispielsweise in einem Fahrzeug zu erzeugen, sondern gleichzeitig auch eine gezielte Aufweitung oder Verengung des Luftstrahls zu erzielen. Es können darüber hinaus Zugeffekte im Fahrzeuginnenraum vermieden werden, da bei einer diffusen Ausströmung von Luft aus der Luftleitvorrichtung trotz höherer Luftmenge kein direktes, als von Fahrgästen als unangenehm empfundenes Anblasen auftritt. Insbesondere ist es möglich, ein glattes Verschließen der Luftleitvorrichtung zu ermöglichen. Aufgrund der flexiblen Einstellbarkeit unterschiedlichster Luftströmungsprofile an der Austrittsseite der Luftleitvorrichtung ist es möglich, eine schnelle und effektive Abkühlung in einem Fahrzeuginnenraum zu gewährleisten.

## Patentansprüche

1. Luftleitvorrichtung (10), insbesondere eines Fahrzeugs, mit mindestens zwei in unterschiedliche Öffnungsstellungen verschwenkbaren, miteinander mittels einer Mitnahmeeinrichtung (12) gekoppelten Lamellen (14), wobei mindestens zwei Lamellen an zueinander in Bezug auf einen jeweiligen Lamellendrehpunkt (16) entgegengesetzten Lamellenbereichen mit der Mitnahmeeinrichtung (12) wirkverbunden sind, **dadurch gekennzeichnet, dass** die Lamellen (14) mittels der Mitnahmeeinrichtung (12) in eine jeweilige Schließstellung schwenkbar sind und mindestens eine Lamelle (20) mittels der Mitnahmeeinrichtung (12) aus der Schließstellung in eine in Bezug auf eine weitere Bewegungsfolge der Mitnahmeeinrichtung (12) unabhängige Öffnungsstellung und mittels selbiger wieder zurück in die Schließstellung schwenkbar ist, wobei die Lamelle (20) mittels eines zeitweise mit selbiger in Anlagekontakt tretenden Mitnehmerelements (22) der bewegbaren Mitnahmeeinrichtung (12) in die unabhängige Öffnungsstellung und in die Schließstellung schwenkbar ist.

2. Luftleitvorrichtung nach Anspruch 1, **dadurch gekennzeichnet, dass** die sich in Schließstellung befindenden Lamellen (14) luftaustrittsseitig vollständig die Luftleitvorrichtung (10) verschließen.

3. Luftleitvorrichtung nach einem der vorhergehenden Ansprüche, **dadurch gekennzeichnet, dass** die Lamellen (14) an der Mitnahmeeinrichtung (12) frei drehbar angelenkt sind.

4. Luftleitvorrichtung nach einem der vorhergehenden Ansprüche, **dadurch gekennzeichnet, dass** mindestens eine Lamelle (18) gesondert mittels der Mitnahmeeinrichtung (12) in ihre Schließstellung schwenkbar ist.

5. Luftleitvorrichtung nach einem der vorhergehenden Ansprüche, **dadurch gekennzeichnet, dass** die sich in unabhängiger Öffnungsstellung befindende Lamelle (20) parallel zu einer Hauptdurchsetzungsrichtung (24) der Luftleitvorrichtung (10) ausgerichtet ist.

6. Luftleitvorrichtung nach einem der vorhergehenden Ansprüche, **dadurch gekennzeichnet, dass** die sich in unabhängiger Öffnungsstellung befindende Lamelle (20) in Bezug auf den Durchsetzungsquerschnitt der Luftleitvorrichtung (10) mittig angeordnet ist.

7. Luftleitvorrichtung nach einem der vorhergehenden Ansprüche, **dadurch gekennzeichnet, dass** mittels der Mitnahmeeinrichtung (12) mindestens zwei Lamellen (14) mit ihren an der Luftaustrittsseite liegenden Enden aufeinander zuschwenkbar sind zur Erzeugung einer konvergierenden Luftaustrittsströmung (26) und/oder voneinander wegschwenkbar sind zur Erzeugung einer divergierenden Luftaustrittsströmung (28).

8. Luftleitvorrichtung nach einem der vorhergehenden Ansprüche, **dadurch gekennzeichnet, dass** die Lamellen (14) um ihren Mittelpunkt (16) drehbar an einer Halterung gelagert und in geeigneten Lamellenendbereichen an der Mitnahmeeinrichtung (12) angelenkt sind.

9. Luftleitvorrichtung nach einem der vorhergehenden Ansprüche, **dadurch gekennzeichnet, dass** mittels der Mitnahmeeinrichtung (12) mindestens eine erste Lamelle (14) in einer ersten Drehrichtung (28) vollständig um den zugehörigen Drehpunkt (16) und mindestens eine zweite Lamelle (14) in einer zweiten Drehrichtung (30), entgegengesetzt zur ersten Drehrichtung (28), bis zu einem definierten Drehumkehrpunkt (32) und anschließend in der ersten Drehrichtung (28) drehbar ist.

10. Luftleitvorrichtung nach Anspruch 9, **dadurch gekennzeichnet, dass** im Drehumkehrpunkt (32) die zweite Lamelle (14) in einer Öffnungsstellung und die erste Lamelle (14) in einer Schließstellung positioniert ist, wobei sich der Lamellenanlenkungspunkt (34) der ersten Lamelle (14) in einem Totpunkt befindet.

11. Luftleitvorrichtung nach einem der vorhergehenden Ansprüche, **dadurch gekennzeichnet, dass** die Lamellenanlenkung an einem jeweiligen, in oder entgegen der Lamellendrehrichtung (28,30) vorstehenden Lamellenvorsprung (36) realisiert ist.

12. Luftleitvorrichtung nach einem der vorhergehenden Ansprüche, **dadurch gekennzeichnet, dass** die Mitnahmeeinrichtung (12) ein entsprechendes Kopplungselement (38) aufweist zur jeweiligen Bewegungskopplung einer Mehrzahl an ersten Lamellen (14) und an zweiten Lamellen (14).

13. Luftleitvorrichtung nach Anspruch 12, **dadurch gekennzeichnet, dass** die Kopplungselemente (38) an ihren Lamellenanlenkungspunkten (34) jeweils mindestens entlang eines Sektors einer geschlossenen Kreisbahn (40) geführt sind.

14. Luftleitvorrichtung nach einem der vorhergehenden Ansprüche, **dadurch gekennzeichnet, dass** die Mitnahmeeinrichtung (12) ein Schubelement (42) aufweist, das in einem jeweiligen Anlenkungspunkt (34) mit dem entsprechenden Kopplungselement (38) wirkverbunden ist.

15. Luftleitvorrichtung nach Anspruch 14, **dadurch gekennzeichnet, dass** das Schubelement (42) als geradlinige, taumelbewegbare Stange ausgebildet ist.

16. Luftleitvorrichtung nach Anspruch 14 oder 15, **dadurch gekennzeichnet, dass** das Schubelement (42) als stufenförmige, längsbewegbare Stange ausgebildet ist.

17. Luftleitvorrichtung nach Anspruch 16, **dadurch gekennzeichnet, dass** die längsbewegbare Stange (42) mindestens eine Führungslängsnut (48) zur Stangenbewegungsführung und für einen jeweiligen Lamellenanlenkungspunkt (34) eine entsprechende Führungsquernut (50) zur Führung einer Relativbewegung eines Lamellenverbindungselements in Bezug auf die Stange (42) aufweist.

18. Luftleitvorrichtung nach einem der vorhergehenden Ansprüche, **dadurch gekennzeichnet, dass** die Mitnahmeeinrichtung (12) eine Mehrzahl an zueinander angelenkte Schubelemente (52) aufweist, an denen jeweils mindestens eine Lamelle (14) angelenkt ist.

19. Luftleitvorrichtung nach Anspruch 18, **dadurch gekennzeichnet, dass** die Schubelemente (52) mittels eines betätigbaren Antriebselements (54) zur Lamellenverschwenkung lagebewegbar sind.

20. Luftleitvorrichtung nach einem der vorhergehenden Ansprüche 13 bis 19, **dadurch gekennzeichnet, dass** die Lamellenanlenkungspunkte (34) in unterschiedlichen Abständen zu den zugehörigen Lamellendrehpunkten (16) liegen.

21. Luftleitvorrichtung nach einem der vorhergehenden Ansprüche, **dadurch gekennzeichnet, dass** die Mitnahmeeinrichtung (12) zwei voneinander beabstandete Lamellenanlenkungselemente (58) aufweist, die jeweils mit einem zugehörigen Bewegungsübertragungselement (60) gelenkartig verbunden sind, welche mittels eines Antriebssystems (62) zur Lamellenverschwenkung bewegbar sind.

22. Luftleitvorrichtung nach Anspruch 21, **dadurch gekennzeichnet, dass** die Bewegungsübertragungselemente (60) mittels eines gemeinsamen Schubelements (66) in Form einer Stange bewegbar sind.

23. Luftleitvorrichtung nach Anspruch 21 oder 22, **dadurch gekennzeichnet, dass** die Lamellenanlenkungselemente (58) in ihren Lamellenanlenkungspunkten (34) und in ihren Anlenkungspunkten (68) für die Bewegungsübertragungselemente (60) jeweils mindestens entlang eines Sektors einer geschlossenen Kreisbahn (40) geführt sind.

24. Luftleitvorrichtung nach einem der vorhergehenden Ansprüche 21 bis 23, **dadurch gekennzeichnet, dass** die Bewegungsübertragungselemente (60) zur Lamellenverschwenkung jeweils drehfest mit einem zugehörigen Zahnrad (70) eines Zahnradtriebs verbunden sind, wobei die Zahnräder (70) miteinander gekoppelt sind.

25. Luftleitvorrichtung nach einem der vorhergehenden Ansprüche 21 bis 24, **dadurch gekennzeichnet, dass** die Lamellenanlenkungselemente (58) jeweils einen Zahnstangensektor aufweisen, welche mit einem zugehörigen Zahnrad in Eingriff stehen, wobei die Zahnräder miteinander gekoppelt sind.

26. Luftleitvorrichtung nach einem der vorhergehenden Ansprüche, **dadurch gekennzeichnet, dass** ein Antriebssystem mit einem Stellmotor vorgesehen ist.

## Claims

1. Air-duct louver device (10), in particular in a vehicle, with at least two louvers (14) which can be swivelled to various open settings and are coupled to one another by means of an actuator device (12), such that at least two louvers are actively connected to the actuator device (12) at louver areas opposite one another in relation to a respective louver rotation point (16), **characterised in that** the louvers (14) can be swivelled by means of the actuator device (12) to a respective closed position and at least one louver (20) can be swivelled by means of the actuator device (12) out of the closed position to an open position independent in relation to a further movement sequence of the actuator device (12) and, by means of the latter, back into the closed position, such that the louver (20) can be swivelled into the said closed position by means of an element (22) of the movable actuator device (12) which at times comes into direct contact therewith.

2. Air-duct louver device according to Claim 1, **characterised in that** when the louvers (14) are in the closed position, they completely block the air-duct louver device (10) on the air outlet side.

3. Air-duct louver device according to either of the preceding claims, **characterised in that** the louvers (14) are articulated on the actuator device (12) such that they can pivot freely.

4. Air-duct louver device according to any of the preceding claims, **characterised in that** at least one louver (18) can be separately swivelled to its closed position by means of the actuator device (12).

5. Air-duct louver device according to any of the preceding claims, **characterised in that** the louver (20) in the independent open position is orientated parallel to a main through-flow direction (24) of the air-duct louver device (10).

6. Air-duct louver device according to any of the preceding claims, **characterised in that** the louver (20) in the independent open position is located centrally relative to the through-flow cross-section of the air-duct louver device (10).

7. Air-duct louver device according to any of the preceding claims, **characterised in that** by means of the actuator device (12) at least two louvers (14) can be swivelled towards one another at their ends on the air outlet side to produce a converging air outflow (26), and/or can be swivelled away from one another to produce a diverging air outflow (28).

8. Air-duct louver device according to any of the preceding claims, **characterised in that** the louvers (14) are fitted to pivot about their mid-point (16) on a holding frame and are articulated to the actuator device (12) at suitable louver end areas.

9. Air-duct louver device according to any of the preceding claims, **characterised in that** by means of the actuator device (12) at least a first louver (14) can be rotated in a first rotation direction (28) completely around the associated pivot point (16) and at least one second louver (14) can be rotated in a second rotation direction (30) opposite to the first rotation direction (28) as far as a defined rotation reversal point (32), and then back in the first rotation direction.

10. Air-duct louver device according to Claim 9, **characterised in that** at the rotation reversal point (32) the second louver (14) is in an open position and the first louver (14) is in a closed position, such that the louver articulation point (34) of the first louver (14) is at a dead point.

11. Air-duct louver device according to any of the preceding claims, **characterised in that** the louver articulation is located on a respective louver projection (36) which extends in or opposite to the rotation direction (28, 30) of the louver.

12. Air-duct louver device according to any of the preceding claims, **characterised in that** the actuator device (12) has a corresponding coupling element (38) for coupling the respective movements of a plurality of first louvers (14) and second louvers (14).

13. Air-duct louver device according to Claim 12, **characterised in that** at their articulation points (34) with the louvers, the coupling elements (38) are each guided along at least a sector of a closed circular path (40).

14. Air-duct louver device according to any of the preceding claims, **characterised in that** the actuator device (12) comprises a thrust element (42) which is in active connection with the corresponding coupling elements (38) at respective articulation points (34).

15. Air-duct louver device according Claim 14, **characterised in that** the thrust element (42) is formed as a straight rod which can move in a tumbler motion.

16. Air-duct louver device according to Claims 14 or 15, **characterised in that** the thrust element (42) is formed as a stepped, longitudinally mobile rod.

17. Air-duct louver device according to Claim 16, **characterised in that** the longitudinally mobile rod (42) has at least one longitudinal guide groove for guiding the movement of the rod, and for each respective louver articulation point (34) a corresponding transverse guide groove (50) for guiding the relative movement of a louver connection element in relation to the rod (42).

18. Air-duct louver device according to any of the preceding claims, **characterised in that** the actuator device (12) comprises a plurality of thrust element (52) articulated to one another, to each of which at least one louver (14) is articulated.

19. Air-duct louver device according to Claim 18, **characterised in that** the positions of the thrust elements (52) can be moved by means of an actuated drive element (54) in order to swivel the louvers.

20. Air-duct louver device according to any of the preceding Claims 13 to 19, **characterised in that** the louver articulation points (34) are at differing distances from the associated louver pivot points (16).

21. Air-duct louver device according to any of the preceding claims, **characterised in that** the actuator device (12) has two louver articulation elements (58) a distance apart from one another, each being articulated to an associated movement transmission element (60) which can be moved by a drive system (62) to swivel the louvers.

22. Air-duct louver device according to Claim 21, **characterised in that** the movement transmission elements (60) can be moved by means of a common thrust element (66) in the form of a rod.

23. Air-duct louver device according to Claims 21 or 22, **characterised in that** the louver articulation elements (58), at their louver articulation points (34) and at their articulation points (68) with the movement transmission elements (60), are in each case guided along at least a sector of a closed circular path (40).

24. Air-duct louver device according to any of the preceding Claims 21 to 23, **characterised in that** the movement transmission elements (60) for swivelling the louvers are in each case connected to an associated gearwheel (70) of a gear drive mechanism, the gearwheels (70) being coupled to one another.

25. Air-duct louver device according to any of the preceding Claims 21 to 24, **characterised in that** the louver articulation elements (58) each comprise a rack-bar section, this being engaged with an associated gearwheel, such that the gearwheels are coupled to one another.

26. Air-duct louver device according to any of the preceding claims, **characterised in that** a drive system with an actuator motor is provided.

## Revendications

1. Dispositif pour diriger l'air (10), notamment pour un véhicule, avec au moins deux lamelles (14) orientables dans différentes positions d'ouverture, couplées entre elles au moyen d'un dispositif d'entraînement (12), au moins deux lamelles appartenant à des champs de lamelles opposés entre eux par rapport à un point de rotation de lamelle (16) respectif étant reliées fonctionnellement avec le dispositif d'entraînement (12), **caractérisé en ce que** les lamelles (14) sont orientables dans une position de fermeture au moyen du dispositif d'entraînement (12) et qu'au moins une lamelle (20) est orientable au moyen du dispositif d'entraînement (12) à partir de la position de fermeture dans une position d'ouverture indépendante suite à une autre série de mouvements du dispositif d'entraînement (12), puis à nouveau dans la position de fermeture au moyen du même, la lamelle (20) étant orientable dans la position d'ouverture indépendante et dans la position de fermeture au moyen d'un élément d'entraînement (22) du dispositif d'entraînement mobile (12) entrant par moments en contact avec celui-ci.

2. Dispositif pour diriger l'air selon la revendication 1, **caractérisé en ce que** les lamelles (14) se trouvant en position de fermeture obturent complètement le dispositif pour diriger l'air (10) du côté de l'évacuation d'air.

3. Dispositif pour diriger l'air selon l'une des revendications précédentes, **caractérisé en ce que** les lamelles (14) sont articulées de manière librement pivotante sur le dispositif d'entraînement (12).

4. Dispositif pour diriger l'air selon l'une des revendications précédentes, **caractérisé en ce qu'**au moins une lamelle (18) est orientable séparément au moyen du dispositif d'entraînement (12) dans sa position de fermeture.

5. Dispositif pour diriger l'air selon l'une des revendications précédentes, **caractérisé en ce que** la lamelle (20) se trouvant en position d'ouverture indépendante est orientée parallèlement à une direction de traversée principale (24) du dispositif pour diriger l'air (10).

6. Dispositif pour diriger l'air selon l'une des revendications précédentes, **caractérisé en ce que** la lamelle (20) se trouvant en position d'ouverture indépendante est disposée au milieu de la section de traversée du dispositif pour diriger l'air (10).

7. Dispositif pour diriger l'air selon l'une des revendications précédentes, **caractérisé en ce qu'**au moins deux lamelles (14) peuvent être orientées l'une vers l'autre avec leurs extrémités se trouvant du côté de l'évacuation d'air, au moyen du dispositif d'entraînement (12), pour générer un flux d'évacuation d'air convergent (26) et/ou peuvent être écartées l'une de l'autre pour générer un flux d'évacuation d'air divergent (28).

8. Dispositif pour diriger l'air selon l'une des revendications précédentes, **caractérisé en ce que** les lamelles (14) sont montées sur une fixation de manière pivotante autour de leur centre (16) et articulées dans des champs de lamelles appropriés sur le dispositif d'entraînement (12).

9. Dispositif pour diriger l'air selon l'une des revendications précédentes, **caractérisé en ce qu'**au moyen du dispositif d'entraînement (12), au moins une première lamelle (14) peut pivoter complètement dans un premier sens de rotation (28) autour du point de rotation correspondant (16) et au moins une deuxième lamelle (14) peut pivoter complètement dans un deuxième sens de rotation (30) opposé au premier sens de rotation (28) jusqu'à un point d'inversion de rotation (32), et ensuite dans le premier sens de rotation (28).

10. Dispositif pour diriger l'air selon la revendication 9, **caractérisé en ce qu'**au point d'inversion de rotation (32), la deuxième lamelle (14) est positionnée dans une position d'ouverture et la première lamelle (14) dans une position de fermeture, le point d'articulation de lamelle (34) de la première lamelle (14) se trouvant sur un point mort.

11. Dispositif pour diriger l'air selon l'une des revendications précédentes, **caractérisé en ce que** l'articulation de lamelle est réalisée sur une saillie de lamelle (36) correspondante, saillant dans ou contre le sens de rotation de lamelle (28, 30).

12. Dispositif pour diriger l'air selon l'une des revendications précédentes, **caractérisé en ce que** le dispositif d'entraînement (12) présente un élément de couplage (38) approprié pour le couplage en mouvement d'une multitude des premières lamelles (14) et de deuxièmes lamelles (14).

13. Dispositif pour diriger l'air selon la revendication 12, **caractérisé en ce que** les éléments de couplage (38) sont guidés au niveau de leurs points d'articulation de lamelle (34) au moins le long d'un secteur d'une trajectoire (40) circulaire fermée.

14. Dispositif pour diriger l'air selon l'une des revendications précédentes, **caractérisé en ce que** le dispositif d'entraînement (12) présente un élément de translation (42) qui est relié fonctionnellement sur un point d'articulation (34) correspondant avec l'élément de couplage (38) correspondant.

15. Dispositif pour diriger l'air selon la revendication 14, **caractérisé en ce que** l'élément de translation (42) est configuré comme une tige rectiligne oscillante.

16. Dispositif pour diriger l'air selon la revendication 14 ou 15, **caractérisé en ce que** l'élément de translation (42) est configuré comme une tige à gradins à mouvement longitudinal.

17. Dispositif pour diriger l'air selon la revendication 16, **caractérisé en ce que** la tige à mouvement longitudinal (42) présente au moins une rainure longitudinale de guidage (48) pour le guidage du mouvement de la tige et, pour un point d'articulation de lamelle (34) respectif, une rainure transversale de guidage correspondante (50) pour le guidage d'un mouvement relatif d'un élément de liaison de lamelles par rapport à la tige (42).

18. Dispositif pour diriger l'air selon l'une des revendications précédentes, **caractérisé en ce que** le dispositif d'entraînement (12) présente une multitude d'éléments de translation (52) articulés les uns sur les autres, sur lesquels au moins une lamelle (14) est articulée.

19. Dispositif pour diriger l'air selon la revendication 18, **caractérisé en ce que** les éléments de translation (52) sont mobiles dans leur plan au moyen d'un élément d'entraînement actionnable (54) pour l'orientation des lamelles.

20. Dispositif pour diriger l'air selon l'une des revendications précédentes 13 à 19, **caractérisé en ce que** les points d'articulation de lamelle (34) se trouvent à différentes distances par rapport aux points de rotation de lamelle (16) correspondants.

21. Dispositif pour diriger l'air selon l'une des revendications précédentes, **caractérisé en ce que** le dispositif d'entraînement (12) présente deux éléments d'articulation de lamelle (58) espacés entre eux qui sont chacun articulés avec un élément de transmission de mouvement correspondant (60), qui sont mobiles au moyen d'un système d'entraînement (62) pour l'orientation des lamelles.

22. Dispositif pour diriger l'air selon la revendication 21, **caractérisé en ce que** les éléments de transmission de mouvement (60) sont mobiles au moyen d'un élément de translation commun (66) sous forme de tige.

23. Dispositif pour diriger l'air selon la revendication 21 ou 22, **caractérisé en ce que** les éléments d'articulation de lamelle (58) sont guidés sur leur points d'articulation de lamelle (34) et sur leurs points d'articulation (68) pour les éléments de transmission de mouvement (60) chacun au moins le long d'un secteur d'une trajectoire circulaire fermée (40).

24. Dispositif pour diriger l'air selon l'une des revendications précédentes 21 à 23, **caractérisé en ce que** les éléments de transmission de mouvement (60) pour l'orientation des lamelles sont reliés chacun de manière non pivotante avec une roue dentée (70) correspondante d'un train de roues dentées, les roues dentées (70) étant couplées entre elles.

25. Dispositif pour diriger l'air selon l'une des revendications précédentes 21 à 24, **caractérisé en ce que** les éléments d'articulation de lamelle (58) présentent chacun un secteur de crémaillère qui est en prise avec une roue dentée correspondante, les roues dentées étant couplées entre elles.

26. Dispositif pour diriger l'air selon l'une des revendications précédentes, **caractérisé en ce qu'**il est prévu un système d'entraînement avec un moteur de commande.
